# DEMANDE DE BREVET EUROPEEN

(11) **EP 4 822 299 A1**
(43) Date de publication de la demande: **14.10.2026**
(21) Numéro de dépôt: 26170405.0
(22) Date de dépôt: 02.04.2026
(51) Int. Cl.: G01C 23/00, B64D 43/00, G08G 5/21, G08G 5/52, G08G 5/53, G08G 5/54, G08G 5/55

(54) **PROCÉDÉ ET SYSTÈME DE CALCUL D'UN VECTEUR DE TRAJECTOIRE DE VOL**

(30) Priorité: 08.04.2025 FR 2503712
(71) Demandeur: Airbus Operations S.A.S., 31060 Toulouse (FR)
(72) Inventeur: RONCERAY, Lilian, 31060 TOULOUSE (FR); MULLER, Jean, 31060 TOULOUSE (FR); ALIX, Guillaume, 31060 TOULOUSE (FR)
(74) Mandataire: Cabinet Le Guen Maillet

(57) **Abrégé**

Un procédé de calcul d'un vecteur de trajectoire de vol, appelé FPV, d'un aéronef, comportant : appliquer (1001) un filtre passe-bas à des données inertielles provenant d'au moins un capteur inertiel embarqué dans l'aéronef et représentatives d'un FPV réel ; calculer (1002) une estimée d'une variation du FPV en fonction de commandes fournies par un pilote de l'aéronef via un manche de pilotage ; calculer (1003) une estimée du FPV en intégrant l'estimée de la variation du FPV ; appliquer (1004) un filtre passe-haut à l'estimée du FPV ; et obtenir (1005) un signal résultant en additionnant un signal de sortie du filtrage passe-bas et un signal de sortie du filtrage passe-haut, le signal résultant de l'addition étant destiné à être affiché en tant que FPV. La solution proposée permet d'améliorer encore la stabilité du FPV en cas de turbulences.

## Description

### DOMAINE TECHNIQUE

La présente invention concerne un procédé et un système de calcul d'un vecteur de trajectoire de vol (ou FPV, pour « Flight Path Vector » en anglais).

### ETAT DE LA TECHNIQUE ANTERIEURE

Le vecteur de trajectoire de vol (FPV) est une information destinée à être affichée dans le cockpit de l'aéronef grâce à un système d'affichage, par exemple un système d'affichage tête haute (ou HUD, pour « Head-Up display » en anglais). Il indique au pilote la trajectoire de l'aéronef résultant de la somme de toutes les forces s'exerçant sur l'aéronef. Sa valeur est calculée par des ordinateurs de vol à bord de l'aéronef.

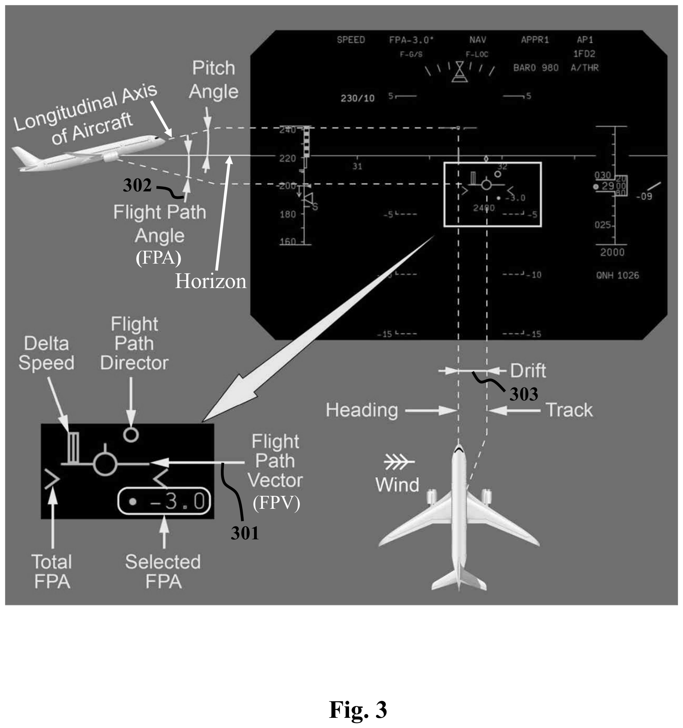

Comme illustré sur la **Fig.3****,** le vecteur de trajectoire de vol (FPV) 301 est affiché sous la forme d'un petit symbole circulaire représentant l'aéronef vu de dos. Il comprend une composante longitudinale 302 (c'est-à-dire selon l'axe longitudinal de l'aéronef), qui est une information relative à l'angle de la trajectoire de vol par rapport à la ligne d'horizon (ou FPA, pour « Flight Path Angle » en anglais), et une composante latérale 303 (c'est-à-dire selon l'axe latéral de l'aéronef), qui est une information relative à la dérive (« Drift » en anglais).

C'est un outil utilisé par les pilotes pour le contrôle précis du vol et la navigation. Il s'agit d'un indicateur qui fournit une représentation visuelle en temps réel de la trajectoire de l'aéronef par rapport à l'horizon. Cela permet aux pilotes de surveiller avec précision l'attitude et la trajectoire de l'aéronef au cours des différentes phases de vol, notamment le décollage, la montée, la croisière, la descente et l'atterrissage.

Actuellement, le vecteur de trajectoire de vol (FPV) est calculé à partir de données (mesures) inertielles fournies par des capteurs inertiels. Ce sont par exemple des capteurs inertiels de type ADIRU (pour « Air Data Inertial Reference Unit » en anglais), compris dans un système de référence inertiel de type ADIRS (pour « Air Data and Inertial Reference System » en anglais).

Le calcul du vecteur de trajectoire de vol (FPV) est effectué sans filtrage des données inertielles. Par conséquent, en cas de turbulences, le vecteur de trajectoire de vol devient agité.

La solution actuelle de calcul du vecteur de trajectoire de vol (FPV) donne satisfaction, mais il existe un besoin de l'améliorer encore, afin de faciliter les différentes phases de vol, notamment l'atterrissage. Il existe notamment un besoin d'améliorer encore la stabilité du vecteur de trajectoire de vol en cas de turbulences. Il existe également un besoin d'améliorer encore la réactivité du vecteur de trajectoire de vol aux actions du pilote sur le manche (manche classique ou mini-manche de type « joystick »), c'est-à-dire aux commandes fournies par le pilote de l'aéronef via le manche de pilotage .

### EXPOSE DE L'INVENTION

Il est proposé un procédé de calcul d'un vecteur de trajectoire de vol d'un aéronef, le procédé étant implémenté par un système de calcul embarqué dans l'aéronef et comprenant une circuiterie électronique, le procédé comportant :
- appliquer un filtre passe-bas à des données inertielles provenant d'au moins un capteur inertiel embarqué dans l'aéronef et représentatives d'un vecteur de trajectoire de vol réel de l'aéronef ;
- calculer une estimée d'une variation du vecteur de trajectoire de vol en fonction de commandes fournies par un pilote de l'aéronef via un manche de pilotage ;
- calculer une estimée du vecteur de trajectoire de vol en intégrant l'estimée de la variation du vecteur de trajectoire de vol ;
- appliquer un filtre passe-haut à l'estimée du vecteur de trajectoire de vol ; et
- obtenir un signal résultant en additionnant un signal de sortie du filtrage passe-bas et un signal de sortie du filtrage passe-haut, le signal résultant de l'addition étant destiné à être affiché, avec un système d'affichage compris dans l'aéronef, en tant que vecteur de trajectoire de vol de l'aéronef.

Ainsi, le principe général de la solution proposée consiste à combiner deux filtrages complémentaires :
- un filtrage passe-bas sur les données inertielles représentatives du vecteur de trajectoire de vol réel de l'aéronef ; ces données inertielles constituent des premières données à partir desquelles peut être calculé le vecteur de trajectoire de vol ; ces premières données sont bruitées en raison des turbulences et le filtrage passe-bas permet de réduire ou supprimer ce bruit ; et
- un filtrage passe-haut sur une estimée du vecteur de trajectoire de vol elle-même calculée en fonction des commandes fournies par le pilote via le manche de pilotage ; cette estimée du vecteur de trajectoire de vol constitue une deuxième donnée à partir de laquelle peut être calculé le vecteur de trajectoire de vol ; cette deuxième donnée est entachée d'une erreur statique et le filtrage passe-haut permet de réduire ou supprimer cette erreur statique et d'obtenir la réponse dynamique de cette deuxième donnée.

En additionnant les signaux de sortie des deux filtrages, on obtient une estimation (valeur calculée) du vecteur de trajectoire de vol qui réduit ou supprime l'impact des turbulences, sans ajouter de retard (c'est-à-dire en conservant la réponse dynamique du vecteur de trajectoire de vol réel). La solution proposée permet donc d'améliorer encore la stabilité du vecteur de trajectoire de vol (FPV) en cas de turbulences.

Selon un mode de réalisation particulier, le procédé comporte : afficher, avec le système d'affichage compris dans l'aéronef, le signal résultant de l'addition, en tant que vecteur de trajectoire de vol de l'aéronef.

Selon un mode de réalisation particulier, le procédé comporte :
- appliquer, au signal résultant de l'addition, une avance de phase déterminée en fonction des commandes fournies par le pilote via le manche de pilotage ; et
- afficher, avec le système d'affichage compris dans l'aéronef, le signal résultant de l'application de l'avance de phase, en tant que vecteur de trajectoire de vol de l'aéronef.

Selon un mode de réalisation particulier, l'application du filtre passe-bas, le calcul de l'estimée du vecteur de trajectoire de vol, l'application du filtre passe-haut et l'obtention du signal résultant sont implémentés :
- en multipliant l'estimée de la variation du vecteur de trajectoire de vol par une valeur de constante de temps du filtre passe-bas ;
- en additionnant les données inertielles et des données résultant de la multiplication ; et
- en appliquant le filtre passe-bas aux données résultant de l'addition des données inertielles et des données résultant de la multiplication.

Selon un mode de réalisation particulier, le système de calcul implémentant le procédé est un système distribué comprenant une première partie hébergée par le système d'affichage et une deuxième partie hébergée par un calculateur primaire de commandes de vol.

Selon un mode de réalisation particulier, le procédé est exécuté d'une part pour une composante longitudinale du vecteur de trajectoire de vol, dite angle de trajectoire de vol, et d'autre part pour une composante latérale du vecteur de trajectoire de vol, dite dérive.

Selon un mode de réalisation particulier, l'exécution pour la composante longitudinale du vecteur de trajectoire de vol, dite angle de trajectoire de vol, comprend : ajouter aux données inertielles, avant application du filtre passe-bas, une correction d'un effet de bras de levier entre le au moins un capteur inertiel et un centre de rotation de l'aéronef.

Selon un mode de réalisation particulier, l'exécution pour la composante longitudinale du vecteur de trajectoire de vol, dite angle de trajectoire de vol, comprend : appliquer à l'avance de phase, avant application de l'avance de phase au signal résultant de l'addition du signal de sortie du filtrage passe-bas et du signal de sortie du filtrage passe-haut, une correction d'un effet de sol subi par l'aéronef.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

Il est aussi proposé un système de calcul d'un vecteur de trajectoire de vol d'un aéronef, embarqué dans l'aéronef et comportant une circuiterie électronique configurée pour implémenter :
- appliquer un filtre passe-bas à des données inertielles provenant d'au moins un capteur inertiel embarqué dans l'aéronef et représentatives d'un vecteur de trajectoire de vol réel de l'aéronef ;
- calculer une estimée d'une variation du vecteur de trajectoire de vol en fonction de commandes fournies par un pilote de l'aéronef via un manche de pilotage ;
- calculer une estimée du vecteur de trajectoire de vol en intégrant l'estimée de la variation du vecteur de trajectoire de vol ;
- appliquer un filtre passe-haut à l'estimée du vecteur de trajectoire de vol ; et
- obtenir un signal résultant en additionnant un signal de sortie du filtrage passe-bas et un signal de sortie du filtrage passe-haut, le signal résultant de l'addition étant destiné à être affiché, avec un système d'affichage compris dans l'aéronef, en tant que vecteur de trajectoire de vol de l'aéronef.

Plus généralement, il est proposé un système de calcul d'un vecteur de trajectoire de vol, configuré pour exécuter le procédé évoqué ci-dessus, selon l'un quelconque de ses modes de réalisation.

Il est aussi proposé un aéronef comprenant un système de calcul d'un vecteur de trajectoire de vol, tel qu'évoqué ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de calcul du vecteur de trajectoire de vol (FPV) ;
[Fig. 2] illustre schématiquement un exemple d'architecture matérielle du système de calcul du FPV de la Fig. 1 ;
[Fig. 3] illustre schématiquement le vecteur de trajectoire de vol (FPV), avec sa composante longitudinale (FPA) et sa composante latérale (dérive) ;
[Fig. 4] illustre schématiquement le système de calcul du FPV de la Fig. 1, dans un premier mode de réalisation ;
[Fig. 5] illustre schématiquement le système de calcul du FPV de la Fig. 1, dans un deuxième mode de réalisation ;
[Fig. 6] illustre schématiquement un exemple de filtrage, par le système de calcul du FPV de la Fig. 1, de la composante longitudinale (FPA) du FPV ;
[Fig. 7] illustre schématiquement le système de calcul du FPV de la Fig. 1, dans un troisième mode de réalisation ;
[Fig. 8] illustre schématiquement le calcul de la composante longitudinale (FPA) du FPV, avec le troisième mode de réalisation (celui de la Fig. 7) du système de calcul du FPV ;
[Fig. 9] illustre schématiquement le calcul de la composante latérale (dérive) du FPV, avec le troisième mode de réalisation (celui de la Fig. 7) du système de calcul du FPV ;
[Fig. 10] illustre schématiquement un algorithme de calcul du FPV, exécuté par le système de calcul du FPV de la Fig. 1, dans un premier mode de réalisation ; et
[Fig. 11] illustre schématiquement un algorithme de calcul du FPV, exécuté par le système de calcul du FPV de la Fig. 1, dans un deuxième mode de réalisation.

### EXPOSE DETAILLE DE MODES DE REALISATION

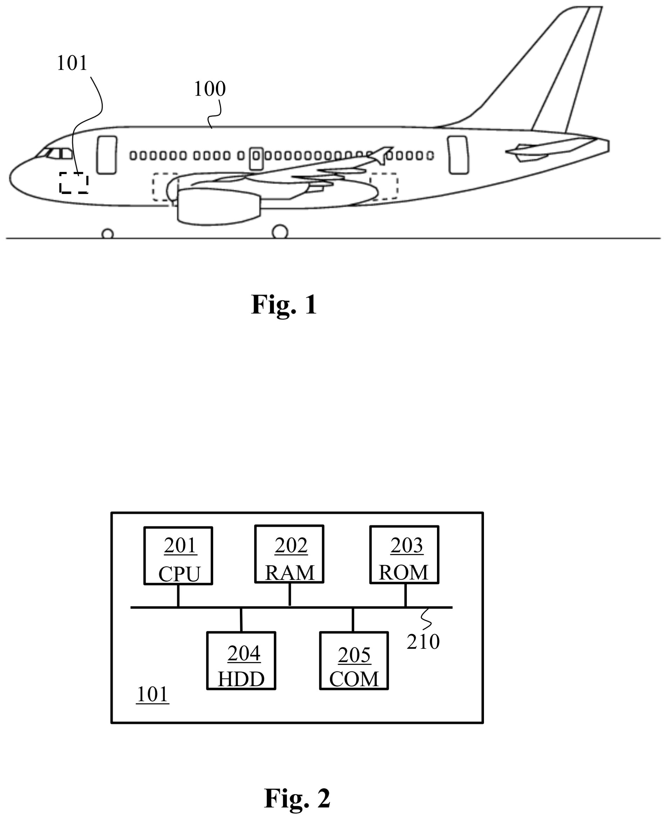

La Fig. 1 illustre schématiquement, en vue de côté, un aéronef 100 équipé d'un système 101 de calcul du vecteur de trajectoire de vol (ou FPV pour « Flight Path Vector », comme déjà mentionné plus haut). Pour simplifier, par la suite ce système 101 est nommé « système de calcul du FPV ».

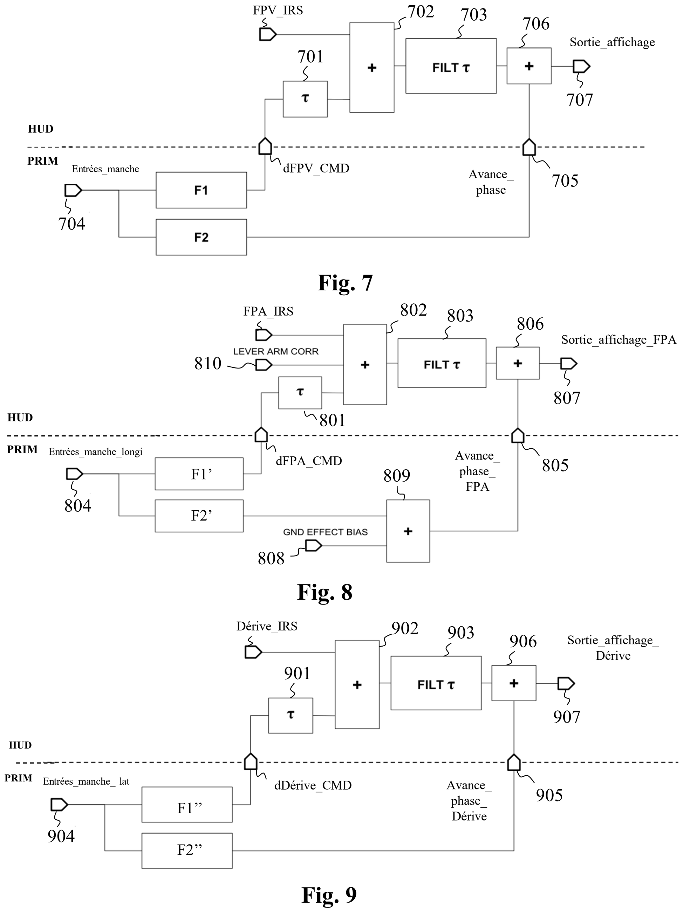

Le système de calcul du FPV 101 est un équipement électronique embarqué dans l'aéronef 100 et comprenant une circuiterie électronique. Par exemple, il fait partie d'une circuiterie électronique de l'avionique de l'aéronef 100. Il est par exemple intégré à un calculateur de l'aéronef 100, ou bien réparti sur plusieurs calculateurs de l'aéronef 100. Comme détaillé par la suite (voir Fig. 7), il est par exemple réparti entre un système d'affichage tête haute (HUD) et un calculateur primaire de commandes de vol (PRIM).

Comme déjà mentionné plus haut, et comme illustré sur la **Fig.3****,** le vecteur de trajectoire de vol (FPV) 301 comprend une composante longitudinale 302, qui est une information relative à l'angle de la trajectoire de vol par rapport à la ligne d'horizon (ou FPA, pour « Flight Path Angle » en anglais), et une composante latérale 303, qui est une information relative à la dérive (« Drift » en anglais).

La **Fig. 2** illustre schématiquement un exemple d'architecture matérielle du système de calcul du FPV 101 de la Fig. 1, qui comprend alors, reliés par un bus de communication 210 : un processeur (ou CPU pour « Central Processing Unit » en anglais) 201 ; une mémoire vive (ou RAM pour « Random Access Memory » en anglais) 202 ; une mémoire morte (ou ROM pour « Read Only Memory » en anglais) 203 ( par exemple une mémoire Flash) ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface de communication 205 permettant au système 101 d'interagir dans l'avionique de l'aéronef 100.

Le processeur 201 est capable d'exécuter des instructions qui forment un programme d'ordinateur et qui sont chargées dans la RAM 202 à partir de la ROM 203, d'une mémoire externe (non représentée), d'un autre support de stockage (tel qu'une carte SD), ou d'un réseau de communication (non représenté). Lorsque le système de calcul du FPV 101 est mis sous tension, le processeur 201 est capable de lire de la RAM 202 les instructions précitées et de les exécuter. Quand elles sont lues (depuis la RAM 202 ou un support de stockage) et exécutées par le processeur 201, ces instructions (qui forment un programme d'ordinateur) entraînent l'exécution, par le processeur 201, des comportements, étapes et algorithme décrits ici.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système de calcul du FPV 101 comprend de la circuiterie électronique agencée et configurée pour implémenter les comportements, étapes et algorithmes décrits ici.

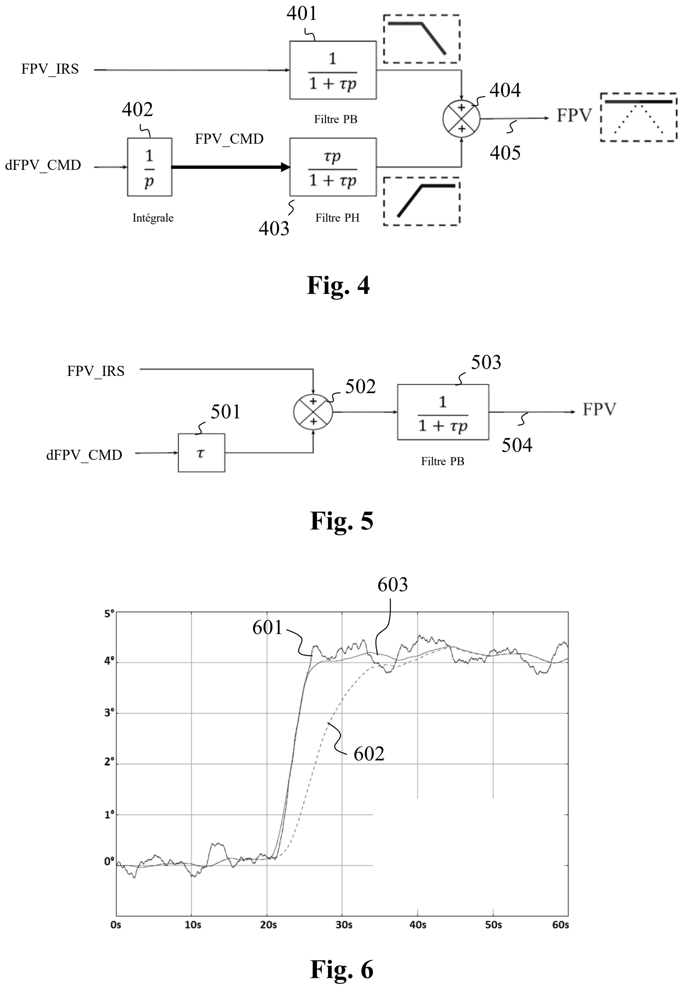

La **Fig. 4** illustre schématiquement le système de calcul du FPV 101 de la Fig. 1, dans un premier mode de réalisation.

Une première branche système de calcul du FPV 101 comprend un filtre passe-bas 401 qui reçoit des données (mesures) inertielles (référencées FPV_IRS), représentatives du vecteur de trajectoire de vol et fournies par des capteurs inertiels embarqués dans l'aéronef 100. Ce sont par exemple des capteurs inertiels de type, compris dans un système de référence inertiel de type ADIRS. Le filtre passe-bas 401 possède une valeur de constante de temps τ. En notation dans le domaine de Laplace, il s'écrit : 1/(1+τ.p), avec p une variable de Laplace (variable complexe).

Une deuxième branche système de calcul du FPV 101 comprend un bloc d'intégration 402, qui génère une estimée du vecteur de trajectoire de vol (référencée FPV_CMD) en intégrant une estimée (référencée dFPV_CMD) d'une variation du vecteur de trajectoire de vol. En notation dans le domaine de Laplace, le bloc d'intégration 402 s'écrit : 1/p, avec p la variable de Laplace précitée. Comme détaillé par la suite (voir Fig. 7), l'estimée dFPV_CMD est elle-même calculée en fonction de commandes fournies par un pilote de l'aéronef 100 via un manche de pilotage. La deuxième branche comprend également un filtre passe-haut 403 qui reçoit l'estimée FPV_CMD. Le filtre passe-haut 403 possède la même valeur de constante de temps τ que le filtre passe-bas 401. En notation dans le domaine de Laplace, il s'écrit : τ.p /(1+τ.p), avec p la variable de Laplace précitée.

Le système de calcul du FPV 101 comprend également un bloc d'addition 404, qui additionne les signaux de sorties des deux filtres 401 et 403, pour générer un signal résultant 405 destiné à être affiché, par exemple par un système d'affichage tête haute (HUD) compris dans le cockpit de l'aéronef 100, en tant que vecteur de trajectoire de vol (FPV) de l'aéronef.

Ainsi, la combinaison des filtrages passe-bas 401 et passe-haut 403 permet d'obtenir un vecteur de trajectoire de vol (FPV) possédant une bonne stabilité en cas de turbulences, sans ajouter de retard (conservation de la réponse dynamique).

Ceci apparaît sur la **Fig. 6****,** qui illustre schématiquement un exemple de filtrage, par le système de calcul du FPV 101 de la Fig. 1 (par exemple selon le premier mode de réalisation de la Fig. 4), de la composante longitudinale (angle de la trajectoire de vol FPA) du FPV lors d'une augmentation d'un échelon (ici passage de 0° à 4° environ). La courbe référencée 601, qui représente l'évolution en fonction du temps du signal brut de FPA, est bruitée du fait de turbulences. Sur la courbe référencée 602, qui représente le signal de sortie du filtre passe-bas 401, le bruit a été très fortement réduit mais le signal a été retardé par rapport à la courbe référencée 601. Sur la courbe référencée 603, qui représente le signal de sortie du bloc d'addition 404, le bruit a également été très fortement réduit (grâce au filtre passe-bas 401), mais ici le signal n'a pas été retardé par rapport à la courbe référencée 601 (grâce au filtre passe-haut 403).

La **Fig. 5** illustre schématiquement le système de calcul du FPV 101 de la Fig. 1, dans un deuxième mode de réalisation qui résulte d'une simplification du premier mode de réalisation de la Fig. 4.

En effet, dans la deuxième branche du premier mode de réalisation, l'ensemble formé par le bloc d'intégration 402 et le filtre passe-haut 403 s'écrit : 1/p * τ.p 1(1+τ.p), ou après simplification : τ /(1+τ.p), ce qui se traduit par une implémentation comprenant un bloc de multiplication par τ suivi d'un filtre passe-bas identique à celui de la première branche (1/(1+τ.p)). Il est donc possible d'utiliser un seul filtre passe-bas commun aux deux branches. Ainsi, dans le deuxième mode de réalisation, le système de calcul du FPV 101 est simplifié et comprend :
- un bloc de multiplication 501, qui reçoit l'estimée dFPV_CMD (estimée de la variation du vecteur de trajectoire de vol) et la multiplie par τ (valeur de constante de temps) ;
- un bloc d'addition 502, qui additionne les données inertielles FPV_IRS et le signal de sortie du bloc de multiplication 501 ; et
- un filtre passe-bas 503 (en notation dans le domaine de Laplace : 1/(1+τ.p)) qui reçoit le signal de sortie du bloc d'addition 502 et génère un signal 504 destiné à être affiché, par exemple par le système d'affichage tête haute (HUD) précité, en tant que vecteur de trajectoire de vol (FPV) de l'aéronef 100.

La **Fig. 7** illustre schématiquement le système de calcul du FPV 101 de la Fig. 1, dans un troisième mode de réalisation.

Comme dans le deuxième mode de réalisation, le système de calcul du FPV 101 comprend :
- un bloc de multiplication 701 (identique au bloc de multiplication 501 de la Fig. 5), qui reçoit l'estimée dFPV_CMD et la multiplie par τ ;
- un bloc d'addition 702 (identique au bloc d'addition 502 de la Fig. 5), qui additionne les données inertielles FPV_IRS et le signal de sortie du bloc de multiplication 701 ; et
- un filtre passe-bas 703 (identique au filtre passe-bas 503 de la Fig. 5), qui reçoit le signal de sortie du bloc d'addition 702.

L'estimée dFPV_CMD est calculée par un bloc de calcul F1, en fonction de commandes 704 (« Entrées_manche ») fournies par le pilote de l'aéronef 100 via le manche de pilotage.

Dans le troisième mode de réalisation, le système de calcul du FPV 101 comprend en outre :
- un bloc de calcul F2, configuré pour calculer un signal d'avance de phase 705 (« Avance_phase ») en fonction des commandes 704 (« Entrées_manche ») ; et
- un bloc d'addition 706, qui additionne le signal de sortie du filtre passe-bas 703 avec le signal d'avance de phase 705, et génère un signal 707 (« Sortie_affichage ») destiné à être affiché, par exemple par le système d'affichage tête haute (HUD) précité, en tant que vecteur de trajectoire de vol (FPV) de l'aéronef 100.

L'ajout de l'avance de phase 705 permet d'améliorer encore la réactivité du vecteur de trajectoire de vol (FPV) aux actions du pilote sur le manche, c'est-à-dire aux commandes 704 fournies par le pilote de l'aéronef via le manche de pilotage. Ainsi, lorsque le pilote bouge le manche, l'affichage du vecteur de trajectoire de vol (FPV) correspond plus à la trajectoire de vol cible qu'à la trajectoire réelle de l'aéronef. L'objectif est que le vecteur de trajectoire de vol (FPV) se fige dès que le pilote relâche le manche et que l'aéronef se verrouille sur cette cible.

La Fig. 7 illustre également un exemple de répartition des éléments du système de calcul du FPV 101 entre :
- le système d'affichage tête haute (HUD), qui comprend le bloc de multiplication 701, le bloc d'addition 702, le filtre passe-bas 703 et le bloc d'addition 706 ; et
- un calculateur primaire de commandes de vol (PRIM), qui comprend le bloc de calcul F1 (qui calcule l'estimée dFPV_CMD) et le bloc de calcul F2 (qui calcule le signal d'avance de phase 705).

Cette répartition permet d'obtenir une architecture générique, facile à déployer sur différents types d'aéronefs. Le calculateur primaire de commandes de vol (PRIM) permet de prendre en compte les commandes 704 fournies par le pilote de l'aéronef via le manche, ainsi que la réponse de l'aéronef sur la base des lois de commande de vol (« Flight Control Laws » en anglais). Dans un mode de réalisation, en cas de perte des termes (c'est-à-dire l'estimée dFPV_CMD et le signal d'avance de phase 705) fournis par le calculateur primaire de commandes de vol (PRIM), le système d'affichage tête haute (HUD) revient sur des logiques existantes pour maintenir l'affichage du FPV.

Dans une variante d'implémentation, le système de calcul du FPV 101 est entièrement compris dans le calculateur primaire de commandes de vol (PRIM), et le système d'affichage tête haute (HUD) est utilisé uniquement pour l'affichage du vecteur de trajectoire de vol (FPV) calculé.

La **Fig. 8** illustre schématiquement le calcul de la composante longitudinale (FPA) du FPV, avec le troisième mode de réalisation (celui de la Fig. 7) du système de calcul du FPV 101.

La composante longitudinale du FPV est une information relative à l'angle de la trajectoire de vol (ou FPA, pour « Flight Path Angle » en anglais) par rapport à la ligne d'horizon.

L'architecture du système de calcul de la composante longitudinale FPA découle directement de celle présentée plus haut, en relation avec la Fig. 7, pour le calcul du vecteur de trajectoire de vol (FPV). Ainsi, les éléments 801, 802, 803, 806, F1' et F2' de la Fig. 8 correspondent respectivement aux éléments 701, 702, 703, 706, F1 et F2 de la Fig. 7. De même, les signaux « Entrées_manche_longi » (804), dFPA_CMD, FPA_IRS, Avance_Phase_FPA » (805) et « Sortie_affichage_FPA » (807) de la Fig. 8 correspondent aux signaux « Entrées_manche » (704), dFPV_CMD, FPV_IRS, Avance_Phase » (705) et « Sortie_affichage » (707) de la Fig. 7.

On suppose que la mesure FPA fournie par le système de référence inertiel de type ADIRS est biaisée par deux éléments :
- le bras de levier (« lever arm » en anglais) entre les capteurs inertiels et le centre de rotation de l'aéronef ; et
- l'effet de sol (« ground effect » en anglais) subi par l'aéronef.

Afin de prendre en compte ces deux biais, le système de calcul de la composante longitudinale FPA comprend :
- en entrée du bloc d'addition 802 (donc avant application du filtrage passe-bas 806), un signal supplémentaire 810 (« LEVER ARM CORRECTION ») de correction de l'effet de bras de levier ; et
- un signal supplémentaire 808 (« GND EFFECT BIAS ») de correction de l'effet de sol, qui est ajouté (grâce à un bloc d'addition 809) au signal d'avance de phase « Avance_Phase_FPA » (805), avant application de ce dernier via le bloc d'addition 806.

La **Fig. 9** illustre schématiquement le calcul de la composante latérale (dérive) du FPV, avec le troisième mode de réalisation (celui de la Fig. 7) du système de calcul du FPV 101.

La composante latérale du FPV est une information relative à la dérive (« Drift » en anglais), c'est-à-dire l'angle entre le cap (« Heading » en anglais) et la route (« Track » en anglais) comme illustré sur la Fig. 3.

On suppose que la mesure de dérive fournie par le système de référence inertiel de type ADIRS n'a pas de biais.

L'architecture du système de calcul de la composante latérale (dérive) découle directement de celle présentée plus haut, en relation avec la Fig. 7, pour le calcul du vecteur de trajectoire de vol (FPV). Ainsi, les éléments 901, 902, 903, 906, F1" et F2" de la Fig. 9 correspondent respectivement aux éléments 701, 702, 703, 706, F1 et F2 de la Fig. 7. De même, les signaux « Entrées_manche_lat » (904), dDérive_CMD, Dérive_IRS, Avance_Phase_Dérive » (905) et « Sortie_affichage_Dérive » (907) de la Fig. 9 correspondent aux signaux « Entrées_manche » (704), dFPV_CMD, FPV_IRS, Avance_Phase » (705) et « Sortie_affichage » (707) de la Fig. 7.

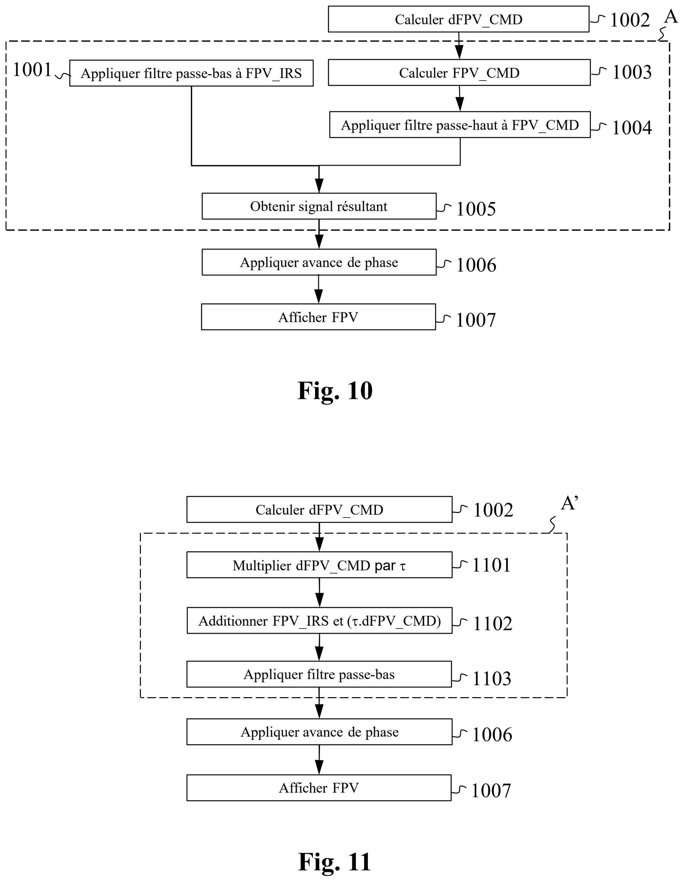

La **Fig. 10** illustre schématiquement un algorithme de calcul du FPV, exécuté par le système de calcul du FPV 101 de la Fig. 1, dans un premier mode de réalisation.

Dans une étape 1001, le système de calcul du FPV 101 applique le filtre passe-bas 401 aux données inertielles FPV_IRS provenant des capteurs inertiels embarqués dans l'aéronef et représentatives du vecteur de trajectoire de vol réel de l'aéronef.

Dans une étape 1002, le système de calcul du FPV 101 calcule l'estimée dFPV_CMD d'une variation du vecteur de trajectoire de vol en fonction des commandes fournies par le pilote de l'aéronef via le manche de pilotage.

Dans une étape 1003, le système de calcul du FPV 101 calcule l'estimée FPV_CMD du vecteur de trajectoire de vol en intégrant l'estimée dFPV_CMD.

Dans une étape 1004, le système de calcul du FPV 101 applique le filtre passe-haut 403 à l'estimée FPV_CMD.

Dans une étape 1005, le système de calcul du FPV 101 obtient un signal résultant en additionnant le signal de sortie du filtrage passe-bas (401) et le signal de sortie du filtrage passe-haut (403).

Dans une étape 1006, le système de calcul du FPV 101 applique au signal résultant de l'addition (étape 1005), une avance de phase déterminée en fonction des commandes fournies par le pilote via le manche de pilotage.

Dans une étape 1007, le système de calcul du FPV 101 affiche, avec le système d'affichage tête haute (HUD), le signal résultant de l'application de l'avance de phase, en tant que vecteur de trajectoire de vol (FPV) de l'aéronef.

La **Fig. 11** illustre schématiquement un algorithme de calcul du FPV, exécuté par le système de calcul du FPV 101 de la Fig. 1, dans un deuxième mode de réalisation.

L'algorithme de la Fig. 11 se distingue de celui de la Fig. 10 en ce que les étapes 1001, 1003, 1004 et 1005 (formant un ensemble d'étapes référencé A) sont remplacées par des étapes 1101, 1102 et 1103 (formant un ensemble d'étapes référencé A').

Dans l'étape 1002, le système de calcul du FPV 101 calcule l'estimée dFPV_CMD.

Dans l'étape 1101, le système de calcul du FPV 101 multiplie l'estimée dFPV_CMD (de l'étape 1002) par la valeur de constante de temps τ du filtre passe-bas 503.

Dans l'étape 1102, le système de calcul du FPV 101 additionne les données inertielles FPV_IRS et des données résultant de la multiplication de l'étape 1101.

Dans l'étape 1103, le système de calcul du FPV 101 applique le filtre passe-bas 503 aux données résultant de l'addition de l'étape 1102.

Dans l'étape 1006, le système de calcul du FPV 101 applique l'avance de phase au signal résultant de l'étape 1103.

Dans l'étape 1007, le système de calcul du FPV 101 affiche, avec le système d'affichage tête haute (HUD), le signal résultant de l'étape 1006, en tant que vecteur de trajectoire de vol (FPV) de l'aéronef.

## Revendications

1. Procédé de calcul d'un vecteur de trajectoire de vol (FPV, 301) d'un aéronef (100), le procédé étant implémenté par un système de calcul (101) embarqué dans l'aéronef et comprenant une circuiterie électronique (200), le procédé comportant :
- appliquer (1001) un filtre passe-bas (401) à des données inertielles (FPV_IRS) provenant d'au moins un capteur inertiel embarqué dans l'aéronef et représentatives d'un vecteur de trajectoire de vol réel de l'aéronef ;
- calculer (1002) une estimée (dFPV_CMD) d'une variation du vecteur de trajectoire de vol en fonction de commandes (701) fournies par un pilote de l'aéronef via un manche de pilotage ;
- calculer (1003) une estimée (FPV_CMD) du vecteur de trajectoire de vol en intégrant l'estimée (dFPV_CMD) de la variation du vecteur de trajectoire de vol ;
- appliquer (1004) un filtre passe-haut (403) à l'estimée (FPV_CMD) du vecteur de trajectoire de vol ; et
- obtenir (1005) un signal résultant en additionnant (404) un signal de sortie du filtrage passe-bas (401) et un signal de sortie du filtrage passe-haut (403), le signal résultant de l'addition étant destiné à être affiché, avec un système d'affichage (HUD) compris dans l'aéronef, en tant que vecteur de trajectoire de vol (FPV, 301) de l'aéronef.

2. Procédé selon la revendication 1, comportant :
- afficher (1007), avec le système d'affichage (HUD) compris dans l'aéronef, le signal résultant de l'addition, en tant que vecteur de trajectoire de vol (FPV, 301) de l'aéronef.

3. Procédé selon la revendication 1, comportant :
- appliquer (1006), au signal résultant de l'addition, une avance de phase (707) déterminée en fonction des commandes (701) fournies par le pilote via le manche de pilotage ; et
- afficher (1007), avec le système d'affichage (HUD) compris dans l'aéronef, le signal résultant de l'application de l'avance de phase, en tant que vecteur de trajectoire de vol (FPV, 301) de l'aéronef.

4. Procédé selon l'une quelconque des revendications 1 à 3, dans lequel l'application (1001) du filtre passe-bas, le calcul (1003) de l'estimée du vecteur de trajectoire de vol, l'application (1004) du filtre passe-haut et l'obtention (1005) du signal résultant sont implémentés :
- en multipliant (1101, 501) l'estimée (dFPV_CMD) de la variation du vecteur de trajectoire de vol par une valeur de constante de temps (τ) du filtre passe-bas ;
- en additionnant (1102, 502) les données inertielles (FPV_IRS) et des données résultant de la multiplication ; et
- en appliquant (1103, 503) le filtre passe-bas aux données résultant de l'addition des données inertielles (FPV_IRS) et des données résultant de la multiplication.

5. Procédé selon l'une quelconque des revendications 1 à 4, dans lequel le système de calcul implémentant le procédé est un système distribué comprenant une première partie hébergée par le système d'affichage (HUD) et une deuxième partie hébergée par un calculateur primaire de commandes de vol (PRIM).

6. Procédé selon l'une quelconque des revendications 1 à 5, **caractérisé en ce qu'**il est exécuté d'une part pour une composante longitudinale du vecteur de trajectoire de vol, dite angle de trajectoire de vol (FPA, 302), et d'autre part pour une composante latérale du vecteur de trajectoire de vol, dite dérive (303).

7. Procédé selon la revendication 6, dans lequel l'exécution pour la composante longitudinale du vecteur de trajectoire de vol, dite angle de trajectoire de vol (FPA, 302), comprend :
- ajouter aux données inertielles (FPV_IRS), avant application du filtre passe-bas (803), une correction (810) d'un effet de bras de levier entre le au moins un capteur inertiel et un centre de rotation de l'aéronef.

8. Procédé selon l'une quelconque des revendications 6 et 7, quand elles dépendent de la revendication 3, dans lequel l'exécution pour la composante longitudinale du vecteur de trajectoire de vol, dite angle de trajectoire de vol (FPA, 302), comprend :
- appliquer à l'avance de phase, avant application de l'avance de phase au signal résultant de l'addition du signal de sortie du filtrage passe-bas et du signal de sortie du filtrage passe-haut, une correction (808) d'un effet de sol subi par l'aéronef.

9. Produit programme d'ordinateur, comportant des instructions entraînant l'exécution, par un processeur (201), du procédé selon l'une quelconque des revendications 1 à 8, lorsque lesdites instructions sont exécutées par le processeur.

10. Support de stockage, stockant un programme d'ordinateur comportant des instructions entraînant l'exécution, par un processeur (201), du procédé selon l'une quelconque des revendications 1 à 8, lorsque lesdites instructions sont lues depuis le support de stockage et exécutées par le processeur.

11. Système (101) de calcul d'un vecteur de trajectoire de vol (FPV, 301) d'un aéronef (100), embarqué dans l'aéronef et comportant une circuiterie électronique (200) configurée pour implémenter :
- appliquer (1001) un filtre passe-bas (401) à des données inertielles (FPV_IRS) provenant d'au moins un capteur inertiel embarqué dans l'aéronef et représentatives d'un vecteur de trajectoire de vol réel de l'aéronef ;
- calculer (1002) une estimée (dFPV_CMD) d'une variation du vecteur de trajectoire de vol en fonction de commandes (701) fournies par un pilote de l'aéronef via un manche de pilotage ;
- calculer (1003) une estimée (FPV_CMD) du vecteur de trajectoire de vol en intégrant l'estimée (dFPV_CMD) de la variation du vecteur de trajectoire de vol ;
- appliquer (1004) un filtre passe-haut (403) à l'estimée (FPV_CMD) du vecteur de trajectoire de vol ; et
- obtenir (1005) un signal résultant en additionnant (404) un signal de sortie du filtrage passe-bas (401) et un signal de sortie du filtrage passe-haut (403), le signal résultant de l'addition étant destiné à être affiché, avec un système d'affichage (HUD) compris dans l'aéronef, en tant que vecteur de trajectoire de vol (FPV, 301) de l'aéronef.

12. Aéronef (100) comprenant un système (101) de calcul d'un vecteur de trajectoire de vol (FPV, 301) selon la revendication 11.
